# EUROPEAN PATENT APPLICATION

(11) **EP 2 827 628 A1**
(43) Date of publication of application: **21.01.2015**
(21) Application number: 13775431.3
(22) Date of filing: 12.04.2013
(51) Int. Cl.: H04W 12/06

(54) **AUTHENTICATION METHOD, DEVICE AND SYSTEM FOR USER EQUIPMENT**

(30) Priority: 12.04.2012 CN 201210106342
(71) Applicant: Huawei Technologies Co., Ltd., Shenzhen, Guangdong 518129 (CN)
(72) Inventor: ZHANG, Dongmei, Shenzhen Guangdong 518129 (CN); XIONG, Chunshan, Shenzhen Guangdong 518129 (CN); CHEN, Jing, Shenzhen Guangdong 518129 (CN)
(74) Representative: Körber, Martin Hans
(86) International application number: PCT/CN2013/074156
(87) International publication number: WO 2013/152740

(57) **Abstract**

Disclose are an authentication method, device and system for a user equipment. The method comprises: first, a user equipment receiving a random value RAND and a cognitive code AUTN in an evolved packet system (EPS) authentication vector sent by a network side device; when an operating mode of the user equipment is a long-term evolved node LTE Hi operating mode, the user equipment performing authentication based on the RAND and the AUTN. In the authentication process, the user equipment ignores a verification result of a separation bit of an authentication management field (AMF) in the AUTN; or, the user equipment does not verify the separation bit of the AMF. The present disclosure is applicable to the field of communication systems.

## Description

### CROSS-REFERENCE TO RELATED APPLICATIONS

This application claims the benefit to Chinese patent application No. 201210106342.2, titled "AUTHENTICATION METHOD, DEVICE AND SYSTEM FOR USER EQUIPMENT" and filed with the State Intellectual Property Office on April 12, 2012, which is hereby incorporated by reference in its entirety.

### TECHNICAL FIELD

The disclosure relates to the field of communication systems, and particularly to an authentication method, device and system for user equipment.

### BACKGROUND

A Long Term Evolution Hi (LTE Hi) technology is a newly introduced communication technology, which is based on the existing mobile network and oriented to a fixed or low speed mobile scene. The protocol stack of a LTE Hi access node is the same as the protocol stack of a Long Term Evolution (LTE) access node. A node Hi may be arranged earlier than the LTE network in a case where the LTE technology is adopted by the air interface protocol. Therefore, the network access may be performed only through the existing 3rd-generation (3G) network in the case where the node Hi is arranged earlier than the LTE network. In this scene, a virtual Evolved Packet Core (EPC) function is provided in an adaptive LTE Hi GateWay (GW); therefore, it may be considered that a virtual Mobility Management Entity (MME) exists from the security point of view. Like the LTE user equipment (UE), the LTE Hi UE may trigger an authentication process when accessing. Since a 3G Home Location Register (HLR) adopts an ordinary 3G authentication, equipment at the network side may set a separation bit of an Authentication Management Field (AMF) in an authentication vector as 0. However, the LTE Hi UE may be considered to adopt an Evolved Packet System (EPS) Authentication and Key Agreement (AKA) authentication; therefore, each parameter may be verified by an EPS AKA authentication process, where whether the EPS AKA authentication process is successful may be judged by detecting whether the separation bit of the AMF in the authentication vector is 1. For the 3G HLR, the separation bit of the AMF is set to be 0, resulting in a problem that the UE cannot pass the verification by the EPS AKA and accordingly cannot access the network normally under the 3G HLR condition.

### SUMMARY

Embodiments of the disclosure provide an authentication method, device and system for user equipment, which solve the problem that the UE cannot pass the verification by the EPS AKA and accordingly cannot access the network normally under the 3G HLR condition, without modifying the process logic of the authentication server HLR.

The embodiments of the disclosure adopt the following technical solutions.

A method for authenticating user equipment is provided, including:
receiving, by the user equipment, a random value RAND and an authentication code AUTN in an Evolved Packet System (EPS) authentication vector sent from equipment at a network side; and
in a case where an operating mode of the user equipment is a Long Term Evolution Hi (LTE Hi) operating mode, performing authentication by the user equipment based on the RAND and the AUTN, where in the authentication, the user equipment ignores a verification result obtained by verifying a separation bit of an Authentication Management Field (AMF) in the AUTN; or, the user equipment does not verify the separation bit of the AMF.

A device for authenticating user equipment is provided, including:
a receiving unit, configured to receive a random value RAND and an authentication code AUTN in an Evolved Packet System (EPS) authentication vector sent from equipment at the network side; and
an authentication unit, configured to perform authentication based on the RAND and the AUTN in a case where an operating mode is a Long Term Evolution Hi (LTE Hi) operating mode, where in the authentication, the authentication unit ignores a verification result obtained by verifying a separation bit of an Authentication Management Field (AMF) in the AUTN; or, the authentication unit does not verify the separation bit of the AMF.

Another method for authenticating user equipment is provided, including:
acquiring a Universal Mobile Telecommunication System (UMTS) authentication vector by equipment at a network side;
in a case where an operating mode of the user equipment is a Long Term Evolution Hi (LTE Hi) operating mode, acquiring an Evolved Packet System (EPS) authentication vector by the equipment at the network side based on the UMTS authentication vector; and
sending, by the equipment at the network side, a random value RAND and an authentication code AUTN in the EPS authentication vector to the user equipment, so that the user equipment performs authentication based on the RAND and the AUTN.

Another device for authenticating user equipment is provided, including:
an acquisition unit, configured to acquire a Universal Mobile Telecommunication System (UMTS) authentication vector,
where the acquisition unit is further configured to acquire an Evolved Packet System (EPS) authentication vector based on the UMTS authentication vector, in a case where an operating mode of the user equipment is a Long Term Evolution Hi (LTE Hi) operating mode; and
a sending unit, configured to send a random value RAND and an authentication code AUTN in the EPS authentication vector to the user equipment, so that the user equipment performs authentication based on the RAND and the AUTN.

A system for authenticating user equipment is provided, including: user equipment; an authentication server HLR; and equipment at a network side MME;
where the HLR is configured to send, after receiving authentication request information sent from the equipment at the network side, authentication request response information carrying a Universal Mobile Telecommunication System (UMTS) authentication vector to the equipment at the network side.

With the method, device and system for authenticating the user equipment provided by the embodiments of the disclosure, the user equipment first receives a random value RAND and an authentication code AUTN in an Evolved Packet System (EPS) authentication vector sent from equipment at a network side; and in a case where an operating mode of the user equipment is a Long Term Evolution Hi (LTE Hi) operating mode, the user equipment performs authentication based on the RAND and the AUTN. In the authentication process, the user equipment ignores a verification result obtained by verifying a separation bit of an Authentication Management Field (AMF) in the AUTN; or, the user equipment does not verify the separation bit of the AMF. In the conventional user equipment authentication, the separation bit of the AMF is set to be 0 for a 3G authentication server HLR, resulting in a problem that the user equipment (UE) cannot pass the verification by the EPS AKA and accordingly cannot access the network normally under the 3G HLR condition. However, in the embodiments of the disclosure, the verification for the separation bit of the AMF is ignored or not performed; therefore, the UE can be normally verified by the EPS AKA without modifying the process logic of the authentication server HLR, thereby solving the problem that the UE cannot pass the verification by the EPS AKA and accordingly cannot access the network normally.

### BRIEF DESCRIPTION OF THE DRAWINGS

In order to more clearly illustrate the technical solutions in embodiments of the disclosure, in the following, accompanying drawings referred to describe the embodiments or the prior art are introduced simply. Obviously, the accompanying drawings in the following description are just some embodiments recited in the disclosure. For those skilled in the art, other accompanying drawings can be obtained based on these accompanying drawings provided herein without any creative work.
Figure 1 is a flow chart of a method for authenticating user equipment provided by an embodiment of the disclosure;
Figure 2 is a schematic structural diagram of a device for authenticating user equipment provided by an embodiment of the disclosure;
Figure 3 is a flow chart of another method for authenticating user equipment provided by an embodiment of the disclosure;
Figure 4 is a schematic structural diagram of another device for authenticating user equipment provided by an embodiment of the disclosure; and
Figure 5 is a schematic structural diagram of a system for authenticating user equipment provided by an embodiment of the disclosure.

### DESCRIPTION OF EMBODIMENTS

In the following, the technical solutions in the embodiments of the disclosure will be described clearly and completely in conjunction with the accompanying drawings in the embodiments of the disclosure. Obviously, the described embodiments are just part of embodiments of the disclosure, rather than all embodiments. Based on the embodiments of the disclosure, all other embodiments obtained by those skilled in the art without any creative work will fall within the scope of protection of the disclosure.

To make the advantages of the technical solutions of the disclosure more clearly illustrated, the disclosure will be described in detail hereinafter in conjunction with the accompanying drawings and the embodiments.

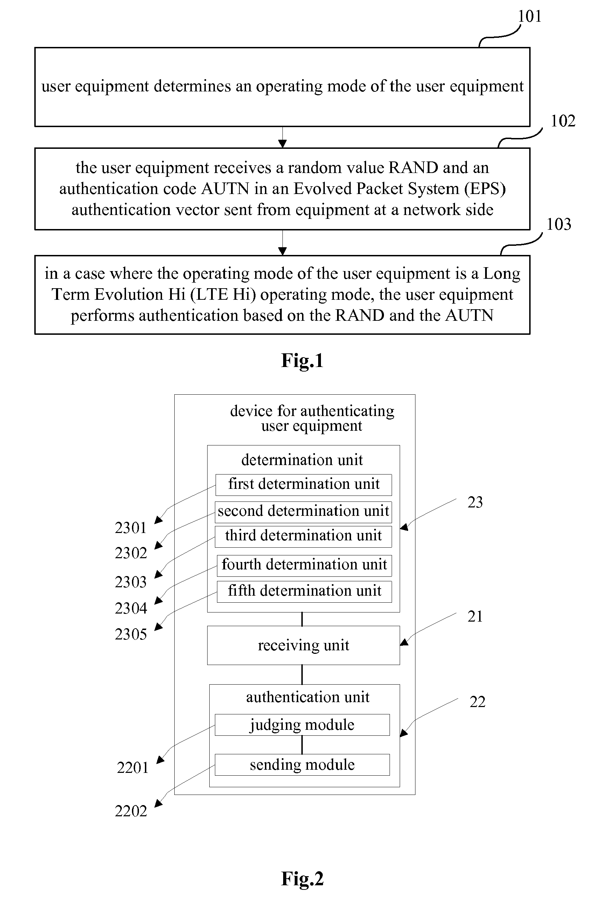

An embodiment provides a method for authenticating user equipment. As shown in Figure 1, the method includes steps 101, 102 and 103.

S101 may include, determining, by the user equipment, an operating mode of the user equipment.

The user equipment may access a network through a wireless access node, and the wireless access node may be a Long Term Evolution Hi (LTE Hi).

Optionally, the user equipment may determine the operating mode corresponding to the user equipment based on the type of the wireless access node. The type of the wireless access node is indicated by equipment at a network side by means of an attach accept message or a tracking area update message or a security mode complete message. Alternatively, the type of the wireless access node is indicated by a broadcast message broadcasted by a cell corresponding to the wireless access node.

The equipment at the network side may be a Mobility Management Entity (MME) or equipment with a MME function, which is not limited herein.

Specifically, the type of the wireless access node may be indicated by adding an indication element of the wireless access node into the information.

Optionally, the user equipment may determine the operating mode corresponding to the user equipment based on a carrier frequency of the wireless access node.

Specifically, since different carrier frequencies correspond to different specific types of an access node respectively, the user equipment may determine, based on a carrier frequency, the type of the access node corresponding to the carrier frequency, thereby judging the operating mode of the user equipment.

Optionally, the user equipment may determine the operating mode of the user equipment based on function information of the user equipment.

The function information may be the version of the user equipment or information of a function module with which the user equipment operates, which is not limited herein.

Optionally, the user equipment may determine the operating mode of the user equipment by judging whether the current operating mode supports a preset function.

Specifically, for example, in a case where the user equipment judges that the current operating mode supports 256 Quadrature Amplitude Modulation (QAM), the user equipment may acquire that the current operating mode is a LTE Hi operating mode.

Optionally, the user equipment acquires the operating mode corresponding to the user equipment, based on a user equipment identity corresponding to the operating mode.

The user equipment identity may be an International Mobile Subscriber Identity (IMSI) corresponding to a USIM used by a user in the operating mode.

S102 may include, receiving, by the user equipment, a random value RAND and an authentication code AUTN in an Evolved Packet System (EPS) authentication vector sent from equipment at the network side.

The Evolved Packet System (EPS) authentication vector includes the RAND, the AUTN, a key KASME and a desired response value RES. The EPS authentication vector is acquired by the equipment at the network side based on a Universal Mobile Telecommunication System (UMTS) authentication vector sent from an authentication server HLR. The KASME is acquired by the equipment at the network side based on an encryption key CK and an integrity protection key IK in the UMTS authentication vector.

Further, in a case where the operating mode of the user equipment is a LTE UE operating mode, the existing EPS AKA is adopted to perform the user equipment authentication.

S103 may include, in a case where the operating mode of the user equipment is a Long Term Evolution Hi (LTE Hi) operating mode, performing authentication by the user equipment based on the RAND and the AUTN.

In the authentication process, the user equipment ignores a verification result obtained by verifying a separation bit of an Authentication Management Field (AMF) in the AUTN; or, the user equipment does not verify the separation bit of the AMF.

Specifically, the user equipment judges whether a Message Authentication Code (MAC) and a Sequence Number (SQN) in the AUTN are the same as a MAC and a SQN of the user equipment respectively. In a case where the MAC and the SQN in the AUTN are the same as the MAC and the SQN of the user equipment respectively, the user equipment sends a message indicating that the verification is successful to the equipment at the network side.

The message indicating that the verification is successful carries a text document RES. Further, the equipment at the network side performs authentication on the user equipment.

An embodiment provides a device for authenticating user equipment. As shown in Figure 2, the entity of the device may be user equipment. The device includes a receiving unit 21, an authentication unit 22, and a determination unit 23.

The receiving unit 21 is configured to receive a random value RAND and an authentication code AUTN in an Evolved Packet System (EPS) authentication vector sent from equipment at a network side.

The authentication unit 22 is configured to perform authentication based on the RAND and the AUTN received by the receiving unit 21, in a case where an operating mode is a Long Term Evolution Hi (LTE Hi) operating mode. In the authentication process, the authentication unit ignores a verification result obtained by verifying a separation bit of an Authentication Management Field (AMF) in the AUTN; or, the authentication unit does not verify the separation bit of the AMF.

The authentication unit 22 may include a judging module 2201 and a sending module 2202.

The judging module 2201 may be configured to judge whether a Message Authentication Code (MAC) and a Sequence Number (SQN) in the AUTN are the same as a MAC and a SQN of the user equipment respectively.

The sending module 2202 may be configured to send a message indicating that the verification is successful to the equipment at the network side, in a case where the MAC and the SQN in the AUTN are the same as the MAC and the SQN of the user equipment respectively.

The determination unit 23 is configured to determine the operating mode.

The determination unit 23 may include a first determination module 2301, a second determination module 2302, a third determination module 2303, a fourth determination module 2304 and a fifth determination module 2305.

The first determination module 2301 may be configured to determine the operating mode based on the type of a wireless access node.

The second determination module 2302 may be configured to determine the operating mode based on a carrier frequency of the wireless access node.

The third determination module 2303 may be configured to determine the operating mode based on function information.

The fourth determination module 2304 may be configured to determine the operating mode by judging whether the current operating mode supports a preset function.

The fifth determination module 2305 may be configured to determine the operating mode based on a user equipment identity corresponding to the operating mode.

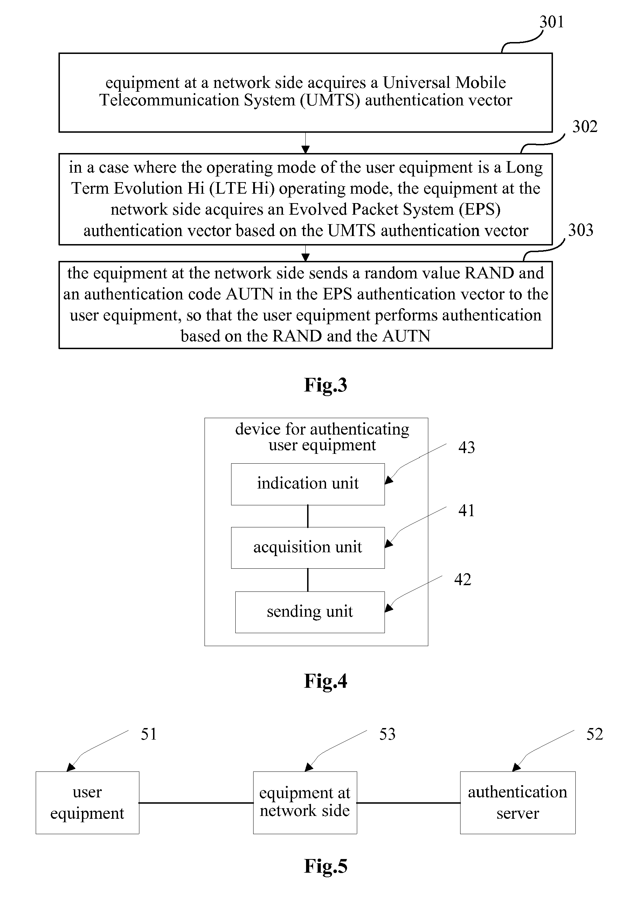

An embodiment provides anther method for authenticating user equipment. As shown in Figure 3, the method includes steps 301, 302 and 303.

S301 may include, acquiring a Universal Mobile Telecommunication System (UMTS) authentication vector by equipment at a network side.

The equipment at the network side may be a Mobility Management Entity (MME) or equipment with a MME function, which is not limited herein. The UMTS includes a random value RAND, an authentication code AUTN, an encryption key CK, an integrity protection key IK and a desired response value RES.

Before the step 301, the method further includes: indicating, by the equipment at the network side, the type of a wireless access node corresponding to the user equipment by means of an attach accept message or a tracking area update message or a security mode complete message, so that the user equipment acquires the operating mode corresponding to the user equipment.

S302 may include, in a case where the operating mode of the user equipment is a Long Term Evolution Hi (LTE Hi) operating mode, acquiring an Evolved Packet System (EPS) authentication vector by the equipment at the network side based on the UMTS authentication vector.

The EPS authentication vector includes a random value RAND, an authentication code AUTN, a key KASME and a desired response value RES. The KASME is acquired by the equipment at the network side based on the CK and the IK in the UMTS authentication vector.

Specifically, the UMTS authentication vector is converted into the Evolved Packet System (EPS) authentication vector based on an equation KASME = KDF (CK∥IK, (FC, SN id, SQN^{o},+AK, length of SN id, length of SQN^{o},+AK)).

The KDF is a key derivation function, the FC is a discrimination value, the SN ID is a service network identity, and the AK is an anonymity key.

S303 may include, sending, by the equipment at the network side, a random value RAND and an authentication code AUTN in the EPS authentication vector to the user equipment, so that the user equipment performs authentication based on the RAND and the AUTN.

An embodiment provides another device for authenticating user equipment. As shown in Figure 4, the entity of the device may be a Mobility Management Entity (MME). The device includes an acquisition unit 41, a sending unit 42 and an indication unit 43.

The acquisition unit 41 is configured to acquire a Universal Mobile Telecommunication System (UMTS) authentication vector.

The acquisition unit 41 may further be configured to acquire an Evolved Packet System (EPS) authentication vector based on the UMTS authentication vector, in a case where an operating mode of the user equipment is a Long Term Evolution Hi (LTE Hi) operating mode.

The UMTS includes a random value RAND, an authentication code AUTN, an encryption key CK, an integrity protection key IK and a desired response value RES. The EPS authentication vector includes the random value RAND, the authentication code AUTN, a key KASME and a desired response value RES. The KASME is acquired by the equipment at the network side based on the CK and the IK in the UMTS authentication vector.

The sending unit 42 is configured to send a random value RAND and an authentication code AUTN in the EPS authentication vector acquired by the acquisition unit 41 to the user equipment, so that the user equipment performs authentication based on the RAND and the AUTN.

The indication unit 43 is configured to indicate the type of a wireless access node corresponding to the user equipment by means of an attach accept message or a tracking area update message or a security mode complete message, so that the user equipment determines the operating mode of the user equipment.

An embodiment provides a system for authenticating user equipment. As shown in Figure 5, the system includes user equipment 51, an authentication server HLR 52 and equipment at the network side 53.

The HLR 52 is configured to send, after receiving authentication request information sent from the equipment at the network side 53, authentication request response information carrying a Universal Mobile Telecommunication System (UMTS) authentication vector to the equipment at the network side.

With the authentication method, device and system for user equipment provided by the embodiments of the disclosure, the user equipment first receives a random value RAND and an authentication code AUTN in an Evolved Packet System (EPS) authentication vector sent from equipment at a network side; and in a case where an operating mode of the user equipment is a Long Term Evolution Hi (LTE Hi) operating mode, the user equipment performs authentication based on the RAND and the AUTN. In the authentication process, the user equipment ignores a verification result obtained by verifying a separation bit of an Authentication Management Field (AMF) in the AUTN; or, the user equipment does not verify the separation bit of the AMF. In the conventional user equipment authentication, the separation bit of the AMF is set to be 0 for a 3G authentication server HLR, resulting in a problem that the user equipment (UE) cannot pass the verification by the EPS AKA and accordingly cannot access the network normally under the 3G HLR condition. However, in the embodiments of the disclosure, the verification for the separation bit of the AMF is ignored or not performed; therefore, the UE can be normally verified by the EPS AKA without modifying the process logic of the authentication server HLR, thereby solving the problem that the UE cannot pass the verification by the EPS AKA and accordingly cannot access the network normally.

The device for authenticating the user equipment provided by the embodiments of the disclosure may implement the methods provided in the above embodiments, and the specific function implementation may refer to the illustration in the method embodiments, which is not repeated herein. The authentication method, device and system for user equipment provided by the embodiments of the disclosure are applicable to the field of communication systems, but are not limited thereto.

It can be understood by those skilled in the art that, all or part of processes that implement the methods in the above embodiments may be completed by instructing related hardware with a computer program. The program may be stored in a computer readable storage medium, and when being implemented, the program can implement the process as described above in individual method embodiments. The storage medium may be a magnetic disk, an optical disk, a read-only memory (ROM), a random access memory (RAM) or the like.

The above description is just for the specific embodiments of the disclosure, and the scope of protection of the disclosure is not limited thereto. Variations or modifications, which may be easily devised by any of those skilled in the art within the technical scope disclosed by the disclosure, should fall within the scope of protection of the disclosure. Therefore, the scope of protection of the disclosure should be defined by the scope of protection of the claims.

## Claims

1. A method for authenticating user equipment, comprising:
receiving, by the user equipment, a random value RAND and an authentication code AUTN in an Evolved Packet System (EPS) authentication vector sent from equipment at a network side; and
in a case where an operating mode of the user equipment is a Long Term Evolution Hi (LTE Hi) operating mode, performing authentication by the user equipment based on the RAND and the AUTN, wherein in the authentication, the user equipment ignores a verification result obtained by verifying a separation bit of an Authentication Management Field (AMF) in the AUTN; or, the user equipment does not verify the separation bit of the AMF.

2. The method for authenticating the user equipment according to claim 1, further comprising:
determining the operating mode of the user equipment by the user equipment.

3. The method for authenticating the user equipment according to claim 2, wherein the determining the operating mode of the user equipment by the user equipment comprises:
determining, by the user equipment, the operating mode of the user equipment based on type of a wireless access node; or
determining, by the user equipment, the operating mode of the user equipment based on a carrier frequency of the wireless access node; or
determining, by the user equipment, the operating mode of the user equipment based on function information of the user equipment; or
determining, by the user equipment, the operating mode of the user equipment by judging whether a current operating mode supports a preset function; or
determining, by the user equipment, the operating mode of the user equipment based on a user equipment identity corresponding to the operating mode.

4. The method for authenticating the user equipment according to claim 3, wherein
the type of the wireless access node is indicated by the equipment at the network side by means of an attach accept message or a tracking area update message or a security mode complete message; or
the type of the wireless access node is indicated by a broadcast message broadcasted by a cell corresponding to the wireless access node.

5. The method for authenticating the user equipment according to any one of claims 1 to 4, wherein the performing authentication by the user equipment based on the RAND and the AUTN comprises:
judging, by the user equipment, whether a Message Authentication Code (MAC) and a Sequence Number (SQN) in the AUTN are the same as a MAC and a SQN of the user equipment respectively; and
in a case where the MAC and the SQN in the AUTN are the same as the MAC and the SQN of the user equipment respectively, sending, by the user equipment, a message indicating that a verification is successful to the equipment at the network side.

6. A device for authenticating user equipment, comprising:
a receiving unit, configured to receive a random value RAND and an authentication code AUTN in an Evolved Packet System (EPS) authentication vector sent from equipment at a network side; and
an authentication unit, configured to perform authentication based on the RAND and the AUTN received by the receiving unit in a case where an operating mode is a Long Term Evolution Hi (LTE Hi) operating mode, wherein in the authentication, the authentication unit ignores a verification result obtained by verifying a separation bit of an Authentication Management Field (AMF) in the AUTN; or, the authentication unit does not verify the separation bit of the AMF.

7. The device for authenticating the user equipment according to claim 6, further comprising:
a determination unit, configured to determine the operating mode.

8. The device for authenticating the user equipment according to claim 7, wherein the determination unit comprises:
a first determination module, configured to determine the operating mode based on type of a wireless access node;
a second determination module, configured to determine the operating mode based on a carrier frequency of the wireless access node;
a third determination module, configured to determine the operating mode based on function information;
a fourth determination module, configured to determine the operating mode by judging whether a current operating mode supports a preset function; and
a fifth determination module, configured to determine the operating mode based on a user equipment identity corresponding to the operating mode.

9. The device for authenticating the user equipment according to claim 8, wherein
the type of the wireless access node is indicated by the equipment at the network side by means of an attach accept message or a tracking area update message or a security mode complete message; or
the type of the wireless access node is indicated by a broadcast message broadcasted by a cell corresponding to the wireless access node.

10. The device for authenticating the user equipment according to any one of claims 5 to 9, wherein the authentication unit comprises:
a judging module, adapted to judge whether a Message Authentication Code (MAC) and a Sequence Number (SQN) in the AUTN are the same as a MAC and a SQN of the user equipment respectively; and
a sending module, adapted to send the message indicating that the verification is successful to the equipment at the network side, in a case where the MAC and the SQN in the AUTN are the same as the MAC and the SQN of the user equipment respectively.

11. A method for authenticating user equipment, comprising:
acquiring a Universal Mobile Telecommunication System (UMTS) authentication vector by equipment at a network side;
in a case where an operating mode of the user equipment is a Long Term Evolution Hi (LTE Hi) operating mode, acquiring an Evolved Packet System (EPS) authentication vector by the equipment at the network side based on the UMTS authentication vector; and
sending, by the equipment at the network side, a random value RAND and an authentication code AUTN in the EPS authentication vector to the user equipment, so that the user equipment performs authentication based on the RAND and the AUTN.

12. The method for authenticating the user equipment according to claim 11, wherein the UMTS comprises a random value RAND, an authentication code AUTN, an encryption key CK, an integrity protection key IK and a desired response value RES; and
the EPS authentication vector comprises the RAND, the AUTN, a key KASME and a desired response value RES, wherein the KASME is acquired by the equipment at the network side based on the CK and the IK in the UMTS authentication vector.

13. The method for authenticating the user equipment according to claim 11, wherein before the acquiring a Universal Mobile Telecommunication System (UMTS) authentication vector by the equipment at the network side, the method further comprises:
indicating, by the equipment at the network side, type of a wireless access node corresponding to the user equipment by means of an attach accept message or a tracking area update message or a security mode complete message, so that the user equipment determines the operating mode of the user equipment.

14. A device for authenticating user equipment, comprising:
an acquisition unit, configured to acquire a Universal Mobile Telecommunication System (UMTS) authentication vector,
wherein the acquisition unit is further configured to acquire an Evolved Packet System (EPS) authentication vector based on the UMTS authentication vector, in a case where an operating mode of the user equipment is a Long Term Evolution Hi (LTE Hi) operating mode; and
a sending unit, configured to send a random value RAND and an authentication code AUTN in the EPS authentication vector acquired by the acquisition unit to the user equipment, so that the user equipment performs authentication based on the RAND and the AUTN.

15. The device for authenticating the user equipment according to claim 14, wherein the UMTS comprises a random value RAND, an authentication code AUTN, an encryption key CK, an integrity protection key IK and a desired response value RES; and
the EPS authentication vector comprises the RAND, the AUTN, a key KASME and a desired response value RES, wherein the KASME is acquired by the equipment at the network side based on the CK and the IK in the UMTS authentication vector.

16. The device for authenticating the user equipment according to claim 14, further comprising:
an indication unit, configured to indicate type of a wireless access node corresponding to the user equipment by means of an attach accept message or a tracking area update message or a security mode complete message, so that the user equipment determines the operating mode of the user equipment.

17. A system for authenticating user equipment, comprising: the device for authenticating the user equipment according to any one of claims 6 to 10; an authentication server HLR; and the device for authenticating the user equipment according to any one of claims 14 to 16,
wherein the HLR is configured to send, after receiving authentication request information sent from the equipment at the network side, authentication request response information carrying the UMTS authentication vector to the equipment at the network side.
